# EUROPEAN PATENT SPECIFICATION

(11) **EP 2 613 100 B1**
(45) Date of publication and mention of the grant of the patent: **29.08.2018**
(21) Application number: 12193339.4
(22) Date of filing: 20.11.2012
(51) Int. Cl.: F24F 11/77, F04D 27/00

(54) **Air conditioner**
Klimaanlage
Climatiseur

(30) Priority: 15.12.2011 JP 2011274787
(43) Date of publication of application: 10.07.2013
(73) Proprietor: MITSUBISHI HEAVY INDUSTRIES THERMAL SYSTEMS, LTD., Tokyo 108-8215 (JP)
(72) Inventor: Takeuti, Nobuyuki, TOKYO, 108-8215 (JP); Yamato, Hironori, TOKYO, 108-8215 (JP)
(74) Representative: Intès, Didier Gérard André

(56) References cited:
- WO-A1-2010/131336
- WO-A2-2010/120429
- JP-A- H05 146 189

## Description

### {Technical Field}

The present invention relates to an air conditioner of the type that blows air whose temperature is adjusted by a heat exchanger into a room through a duct connected to a unit main body.

### {Background Art}

In a ducted air conditioner configured to blow air whose temperature is adjusted in a unit main body accommodating a heat exchanger and a fan into a room through a duct disposed, for example, in a ceiling, an AC motor is employed as a fan motor. In this case, since the fan is operated at a constant output, the airflow resistance changes depending on the length, diameter, shape, or the like of the duct, and thus, there is no means for ascertaining the external static pressure, which depends thereon. Accordingly, problems have occurred in the case where the air conditioner is installed in an old building or the like using an existing duct; for example, a high external static pressure causes the airflow rate to decrease, thus reducing the performance, and in contrast, a lower external static pressure causes an excessive airflow rate, worsening the draft.

Thus, a DC fan motor having a configuration allowing it to be operated at an indicated constant airflow rate even if the pressure loss changes depending on the length, diameter, shape, or the like of the duct and in which the airflow rate can be maintained constant without providing a special sensor for detecting the airflow rate is disclosed in PTL 1. WO 2010/131336 A1 discloses another air conditioner comprising the features of the preamble of claim 1.

### {Citation List}

### {Patent Literature}

{PTL 1} Publication of Japanese Patent No. 3012721

### {Summary of Invention}

### {Technical Problem}

The disclosure in PTL 1 described above ensures the indicated airflow rate, thereby allowing operation at a constant airflow rate, by operating the DC motor while applying a preset voltage thereto, comparing the operating rotational speed Na of the motor detected by rotational-speed detection means and a prescribed rotational speed Nma corresponding to both a present indicated airflow rate Qm and an applied voltage Va stored in storage means, and repeating the operation while increasing and decreasing the voltage to be applied to the motor until the operating rotational speed Na and the prescribed rotational speed Nma become equal. Therefore, it takes much time to perform adjustment, and the voltage applied is simply controlled so that the operating rotational speed reaches the prescribed rotational speed; thus, there are problems in that, for example, variations in control circuit components, the supply voltage, the motor command voltage, and so on cannot be compensated for, so that the airflow rate cannot be accurately adjusted to the constant airflow rate.

Thus, an approach has been proposed in which the external static pressure, which depends on the length, diameter, shape, or the like of the duct, is set, and the rotational speed of the DC fan motor is set so that a rated airflow rate can be obtained from a rotational-speed-versus-static-pressure-setting table on the basis of the external static pressure. However, this external static pressure setting is via rotational speed control and is not limited by the duct static pressure. Therefore, if the duct static pressure is set low under setting conditions under which the rotational speed becomes high, the airflow rate exceeds the setting, which can cause problems such as drain water being blown out, increased noise, and so on. In particular, setting the external static pressure high has the problem of increasing the risks.

The present invention is made in consideration of such circumstances, and an object thereof is to provide an air conditioner in which an external static pressure that changes depending on the configuration of the duct is automatically determined, so that a rated airflow rate can be obtained at that external static pressure, and in which an excessive airflow rate can be prevented by limiting the range in which a correction setting for the external static pressure can be made manually.

### {Solution to Problems}

To solve the problems described above, an air conditioner of the present invention adopts the following solutions.

Specifically, an air conditioner according to the present invention is an air conditioner in which a duct for blowing air whose temperature is adjustable by a heat exchanger into a room is connected to a unit main body accommodating the heat exchanger and a DC fan motor, and the rotational speed of the DC fan motor is controllable so that a rated airflow rate can be obtained under an external static pressure that is determined depending on the configuration of the duct, the air conditioner comprising an airflow-rate setting section for automatically determining the external static pressure after the air conditioner is installed and for setting the rotational speed of the DC fan motor on the basis of the external static pressure so as to obtain the rated airflow rate; the air conditioner being characterized by an external-static-pressure-correction setting section that is provided in a remote control device and that allows a correction setting for the external static pressure to be made manually, wherein a limiting section is provided for limiting a manual setting range in which a correction setting for the reference external static pressure that is automatically determined by the airflow-rate setting section can be made by the external-static-pressure-correction setting section to a preset width of range.

According to the present invention, since an air conditioner in which the rotational speed of the DC fan motor is controlled so that a rated airflow rate can be obtained under an external static pressure that is determined depending on the configuration of a duct for blowing temperature-adjusted air into a room is equipped with an airflow-rate setting section that automatically determines the external static pressure after the air conditioner is installed and that sets the rotational speed of the DC fan motor on the basis of the external static pressure so as to obtain the rated airflow rate; and since an external-static-pressure-correction setting section that is provided in a remote control device and that allows a correction setting for the external static pressure to be made manually, wherein a limiting section is provided which limits a manual setting range in which a correction setting for the reference external static pressure that is automatically determined by the airflow-rate setting section can be made by the external-static-pressure-correction setting section to a preset range, the rotational speed of the DC fan motor is set on the basis of the external static pressure that is automatically determined by the airflow-rate setting section so as to obtain a rated airflow rate. In the case where a correction setting for the reference external static pressure is made manually at the remote control device, the range is limited to a preset range via the limiting section. In other words, the external static pressure setting is via rotational speed control and is not limited by the duct static pressure, and therefore, if the duct static pressure is set low while making the correction setting at the remote control device under conditions where the rotational speed becomes high, the airflow rate exceeds the setting, which can cause problems such as drain water being blown out into the room, increased noise, and so on. However, a situation in which the airflow rate exceeds the set airflow rate can be prevented by allowing the manual correction setting range to be limited to a preset range. This can prevent problems such as drain water being blown out into the room, increased noise, and so on even if the external static pressure is corrected manually.

Furthermore, the air conditioner of the present invention described above is adapted to perform the automatic external-static-pressure determination operation during an air-blow test operation that is performed at the first power-up after the air conditioner is installed or by selecting AUTO with the external-static-pressure-correction setting section provided in the remote control device.

With this configuration, since the automatic external-static-pressure determination operation can be performed during an air-blow test operation that is performed at the first power-up after the air conditioner is installed or by selecting AUTO with the external-static-pressure-correction setting section provided in the remote control device, the automatic external-static-pressure determination operation can be performed as needed during an air-blow test operation at the first power-up after the air conditioner is installed or during an air-blow test operation that is performed when AUTO is selected with the external-static-pressure-correction setting section in the remote control device, and the rotational speed of the DC fan motor is set on the basis of the external static pressure so that the rated airflow rate can be obtained, and thus, the airflow rate can be accurately adjusted. Even if the external static pressure is corrected at the remote control device, the external static pressure is limited within a set range, thereby preventing the airflow rate from exceeding the set airflow rate. Accordingly, it is possible to prevent problems when the external static pressure is corrected.

Furthermore, in any one of the air conditioners described above, the airflow-rate setting section may include a section for operating the DC fan motor at two preset rotational speeds and the air conditioner further includes a motor control circuit configured to output motor output values to the DC fan motor during said operation at the two preset rotational speeds, wherein the air conditioner is further configured to read the motor output values, to determine an external static pressure from the difference between the motor output values at the two rotational speeds, and to set the rotational speed of the DC fan motor on the basis of the external static pressure from a rotational-speed-versus-static-pressure-setting table so as to obtain a rated airflow rate.

With this configuration, the airflow-rate setting section includes a section that operates the DC fan motor at two preset rotational speeds, during which motor output values output from a motor control circuit to the DC fan motor are read, an external static pressure is determined from the difference between the motor output values at the two rotational speeds, and the rotational speed of the DC fan motor is set on the basis of the external static pressure from the rotational-speed-versus-static-pressure-setting table so as to obtain the rated airflow rate. Therefore, by operating the DC fan motor at two preset rotational speeds during an air-blow test operation at the first power-up after the air conditioner is installed or during an air-blow test operation performed when AUTO is selected with the external-static-pressure-correction setting section in the remote control device, the external static pressure is determined by the unit itself from the difference between the motor output values, and by setting the rotational speed of the DC fan motor on the basis of the external static pressure from the rotational-speed-versus-static-pressure-setting table so as to achieve the rated airflow rate, the airflow rate can be quickly adjusted. This allows the air conditioner to be operated while ensuring the indicated airflow rate, thus reliably preventing a decrease in performance due to a drop in airflow rate when the external static pressure is high, a draft due to an increase in airflow rate when the external static pressure is low, and so on.

### {Advantageous Effects of Invention}

According to the present invention, the rotational speed of the DC fan motor is set on the basis of the external static pressure that is automatically determined by the airflow-rate setting section so as to obtain a rated airflow rate; and in the case where a correction setting for the reference external static pressure is made manually at the remote control device, the range is limited to a preset range via the limiting section. In other words, the external static pressure setting is via rotational speed control and is not limited by the duct static pressure, and therefore, if the duct static pressure is set low while making the correction setting at the remote control device under conditions where the rotational speed becomes high, the airflow rate exceeds the setting, which can cause problems such as drain water being blown out into the room, increased noise, and so on. However, a situation in which the airflow rate exceeds the set airflow rate can be prevented by allowing the manual correction setting range to be limited to a preset range. This can prevent problems such as drain water being blown out into the room, increased noise, and so on even if the external static pressure is corrected manually.

### {Brief Description of Drawings}

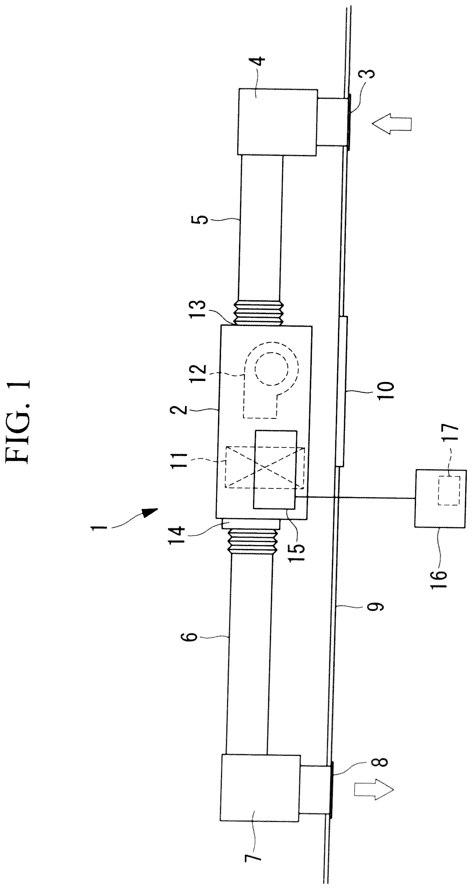

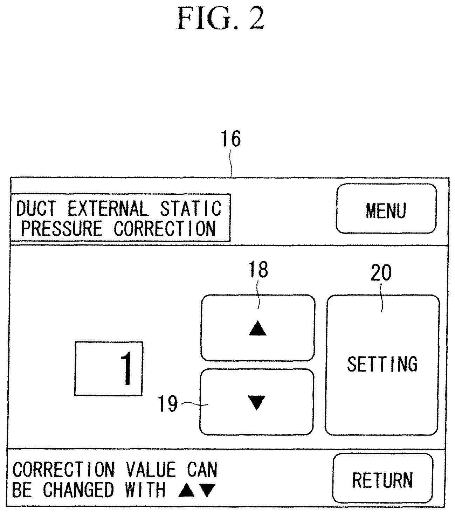

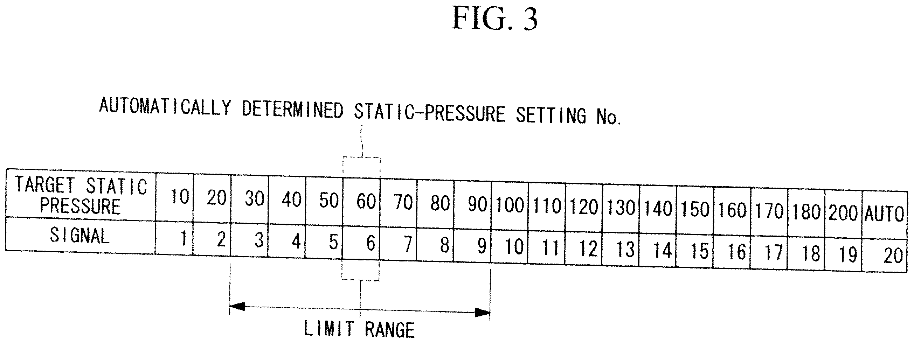

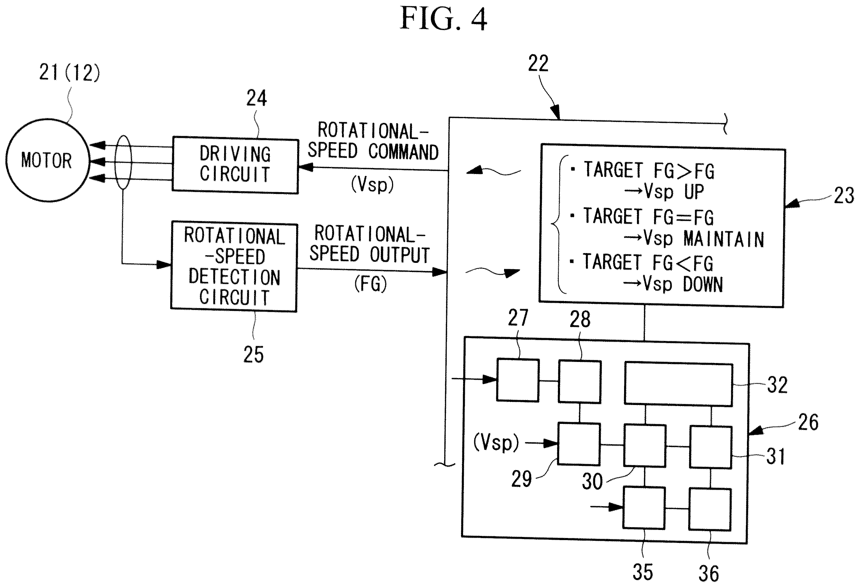

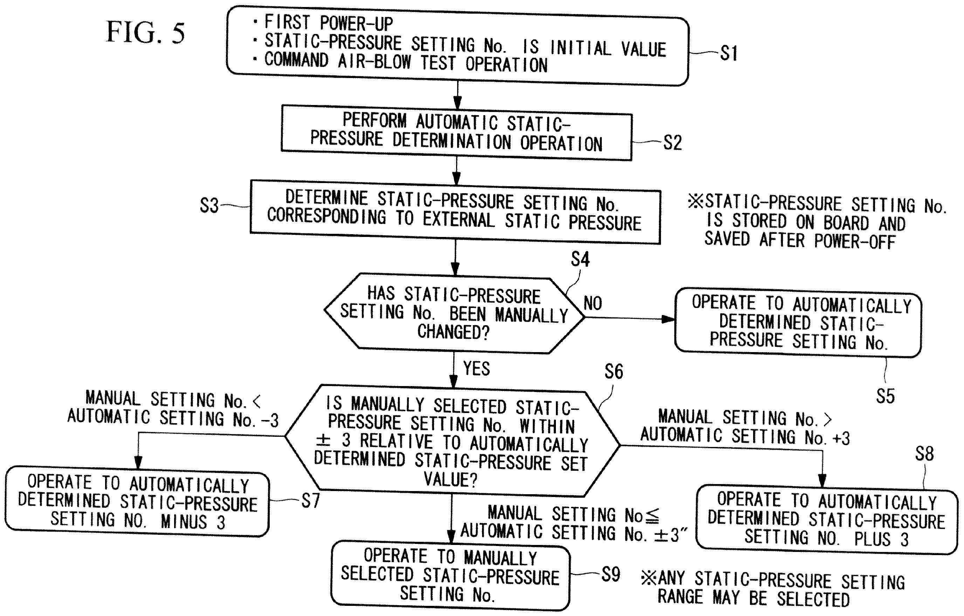

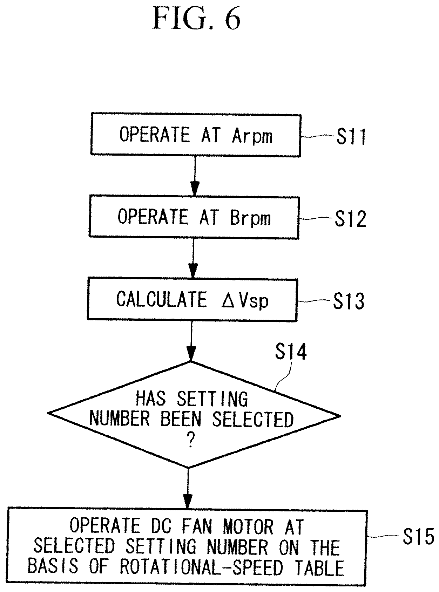

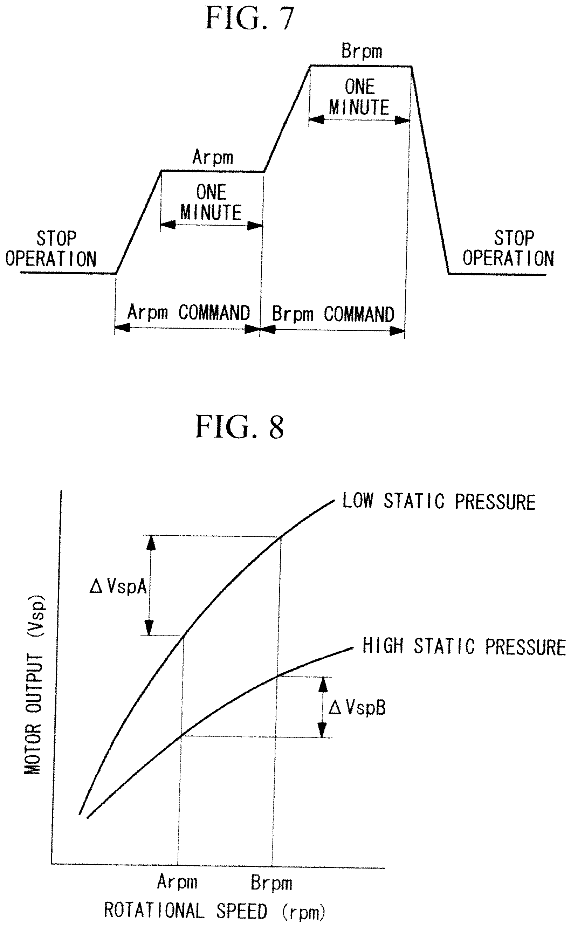

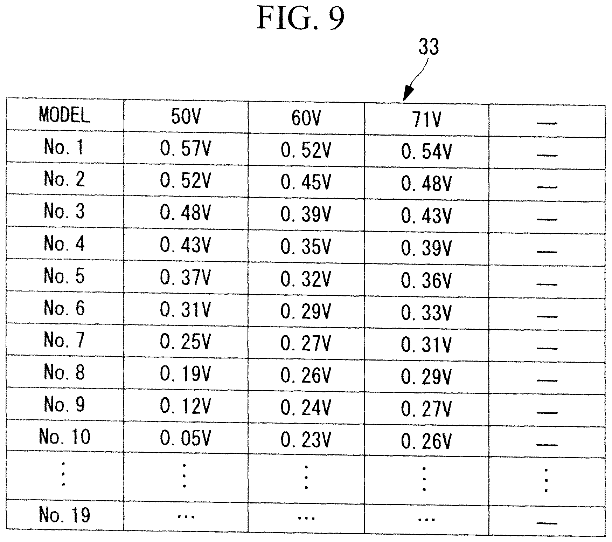

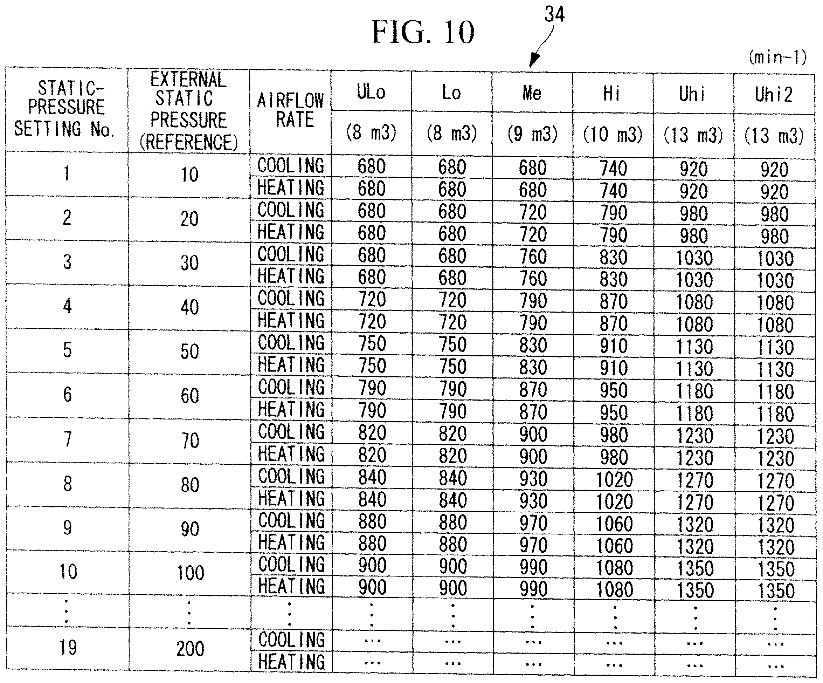

{Fig. 1} Fig. 1 is a schematic side view showing an example of the installation state of a ducted air conditioner according to an embodiment of the present invention.
{Fig. 2} Fig. 2 shows an example of an external-static-pressure correction setting screen on a remote control device of the ducted air conditioner shown in Fig. 1.
{Fig. 3} Fig. 3 is a correlation diagram of target static pressures set by an external-static-pressure-correction setting section of the remote control device of the ducted air conditioner shown in Fig. 1 and signals thereof.
{Fig. 4} Fig. 4 is a control circuit diagram of a DC fan motor of the ducted air conditioner shown in Fig. 1.
{Fig. 5} Fig. 5 is a control flowchart of a control circuit for the DC fan motor shown in Fig. 4 while the airflow rate is adjusted.
{Fig. 6} Fig. 6 is a control flowchart of an automatic external-static-pressure determination operation while the airflow rate is adjusted in Fig. 5.
{Fig. 7} Fig. 7 is a timing chart of a DC fan motor rotation command during the automatic external-static-pressure determination operation shown in Fig. 5.
{Fig. 8} Fig. 8 is a graph showing the relationship between the rotational speed and the motor output (Vsp) of the DC fan motor during the automatic external-static-pressure determination operation shown in Fig. 5 and static pressure.
{Fig. 9} Fig. 9 shows an example of a determination table for selecting a static-pressure setting number based on the motor output difference (Vsp) during the automatic external-static-pressure determination operation shown in Fig. 5.
{Fig. 10} Fig. 10 shows an example of a rotational-speed-versus-static-pressure-setting table for use in setting the rotational speed of the DC fan motor during the automatic external-static-pressure determination operation shown in Fig. 5.

### {Description of Embodiment}

An embodiment of the present invention will be described hereinbelow with reference to Figs. 1 to 10.

Fig. 1 is a schematic side view showing an example of the installation state of a ducted air conditioner according to an embodiment of the present invention. Note that this embodiment shows a duct-type air conditioner embedded in a ceiling as an example of the ducted air conditioner.

As shown in Fig. 1, a unit main body 2 of this ducted air conditioner 1 is suspended in a ceiling with a plurality of bolts provided in the vertical direction in a beam or the like of a building. An outdoor unit installed outdoors is not shown.

The ducted air conditioner (air conditioner) 1 is configured to exchange the heat of room air taken in from the interior of a room through an intake grill 3, a noise damping chamber 4, and an intake duct 5 with the heat of refrigerant to cool or heat the air and to blow it into the room through an outlet duct 6, an outlet unit 7, an outlet grill 8, and so on. The length, diameter, shape, and so on of the outlet duct 6 are variously changed depending on the installation position etc. of the outlet unit 7. A ceiling surface 9 is provided with an inspection hole 10 for inspecting or maintaining the unit main body 2 of the ducted air conditioner 1.

The unit main body 2 is shaped like a box, in which are installed an indoor-heat exchanger (heat exchanger) 11 that exchanges heat between the refrigerant and the indoor air, a DC fan motor 12 composed of a plurality of paired sirocco fans and DC motors that circulate the indoor air, a drain pan that receives drain water generated in the indoor-heat exchanger 11, a drain pump that discharges the drain water accumulated in the drain pan to the outside (the drain pan and the drain pump are not shown), and so on. On the outside thereof, an intake port 13 and an outlet port 14 are provided in the front and back side surfaces, to which the intake duct 5 and the outlet duct 6 are connected, respectively, and a control box 15 for controlling the operation of the ducted air conditioner 1 is provided on one side surface. A remote control device 16 is connected to the control box 15.

The remote control device 16 is provided with an external-static-pressure-correction setting section 17, which allows an external static pressure at the outlet duct 6 side, which depends on the lengths, diameters, shapes, and so on of the outlet duct 6, the outlet unit 7, the outlet grill 8, and so on, to be automatically determined, or the setting thereof to be corrected, as will be described later. In other words, the remote control device 16 is configured to allow a static-pressure correction screen, as shown in Fig. 2, to be displayed from a menu screen, to allow one of Nos. 1 to 19 to be selected with operating operation buttons 18 and 19 on the touch panel, and to allow the external static pressure setting to be corrected to a target static pressure corresponding to that number, for example, within the range of 10 to 200 Pa, as shown in Fig. 3, by operating a set button 20.

Furthermore, selecting AUTO with No. 20 by operating the operation buttons 18 and 19 allows the external static pressure, which depends on the length, diameter, shape, and so on of the outlet duct 6 side, to be automatically determined at the first power-up after the air conditioner 1 is installed and at all times thereafter, as will be described later. Furthermore, the rotational speed of the DC fan motor 12 can be set so that a rated airflow rate can be obtained on the basis of the external static pressure set with the remote control device 16, as will be described later.

As shown in Fig. 4, the DC fan motor 12 is configured such that a DC motor 21 is rotationally driven via a driving circuit 24 on the basis of a motor output value (for example, a rotational-speed command voltage Vsp) output from a motor control circuit 23 of a controller (control board) 22, and the rotational speed is detected by a rotational-speed detection circuit 25, the output FG is fed back to the motor control circuit 23 of the controller 22, where a target FG and the rotational speed output FG are compared, and the output value (rotational-speed command voltage Vsp) to the DC motor 21 is adjusted so that the rotational speed of the DC fan motor 12 reaches the target value (target FG).

The controller 22 is provided with an airflow-rate setting circuit (airflow-rate setting section) 26 that adjusts the airflow rate (rotational speed) of the DC fan motor 12 according to the external static pressure that is determined depending on the pressure loss etc., which changes depending mainly on the length, diameter, shape, or the like of the outlet duct 6, to allow a rated airflow rate to be obtained even if the external static pressure changes. This airflow-rate setting circuit (airflow-rate setting section) 26 is equipped with an operation command section 28 that operates the DC fan motor 12 (DC motor 21) at two preset rotational speeds A and B in accordance with a command signal output from an air-blow test operation command section 27 at the first power-up after the air conditioner 1 is installed or when Auto (AUTO at No. 20) is selected with the external-static-pressure-correction setting section 17 of the remote control device 16.

The airflow-rate setting circuit 26 is further equipped with a calculating section 29 that reads motor output values, that is, rotational-speed command voltages VspA and VspB, output to the DC motor 21 via the motor control circuit 23 in accordance with a command from the operation command section 28 and calculates the difference therebetween, ΔVsp (= VspB - VspA); a determination section 30 that determines the external static pressure at the outlet duct 6 side from the difference in motor output value, ΔVsp, calculated by the calculating section 29 on the basis of a determination table 33 (see Fig. 9); a rotational-speed setting section 31 that sets the rotational speed of the DC fan motor 12 on the basis of the external static pressure from a rotational-speed-versus-static-pressure-setting table 34 (see Fig. 10) so that a rated airflow rate can be obtained; and a storage section 32 that stores data, such as the determination table 33 and the rotational-speed-versus-static-pressure-setting table 34.

The airflow-rate setting circuit 26 is further equipped with an external-static-pressure correcting section 35 that, when a correction setting for an automatically determined external static pressure is made manually using the external-static-pressure-correction setting section 17 of the remote control device 16, inputs the corrected target static pressure to the determination section 30 and the rotational-speed setting section 31 to change the external static pressure; and a limiting section 36 that limits the manual setting range in which a correction setting can be made via the external-static-pressure-correction setting section 17 and the external-static-pressure correcting section 35 to a preset range. As shown in Fig. 3, the range limited by the limiting section 36 is set so that the range that can be set manually is limited to, for example, within ±30 Pa (= ±3) from an automatically determined reference external static pressure of 60 Pa (= 6).

Next, the operation of the foregoing airflow-rate setting circuit (airflow-rate setting section) 26 will be described using Figs. 5 to 10.

As shown in Fig. 5, at the first power-up after the air conditioner 1 is installed, or when Auto (AUTO at No. 20) is selected with the external-static-pressure-correction setting section 17 of the remote control device 16, a command signal is output from the air-blow test operation command section 27 to the operation command section 28, as in step S1, and thus, the process proceeds to step S2, where an automatic external-static-pressure determination operation is performed.

In this automatic external-static-pressure determination operation, as shown in Fig. 6, first in step S11, the DC fan motor 12 is operated at a preset rotational speed Arpm for several minutes in accordance with a command from the operation command section 28, and next in step S12, the DC fan motor 12 is operated at a preset rotational speed Brpm for several minutes. This operation is carried out in an air blow mode. Fig. 7 shows the timing chart of this operation, in which the fan motor duty is sampled for one minute before the end of the Arpm and Brpm command operations, which each last for several minutes.

As shown in Fig. 8, the sampling of the fan motor duty at the two rotational speeds of Arpm and Brpm is performed by reading ΔVspA and ΔVspB from the graph of the relationship between the rotational speed (rpm) and the motor output (Vsp) of the DC fan motor 12 and static pressures. In step S13, the calculating section 29 reads ΔVspA and ΔVspB in Fig. 8 and calculates the difference therebetween, ΔVsp (ΔVsp = ΔVspB -ΔVspA).

In step S13, when the difference ΔVsp between the motor output values (ΔVspA and ΔVspB) is calculated, the process proceeds to step S14. This step S14 corresponds to step S3 in the control flowchart shown in Fig. 5 in which the static-pressure setting number corresponding to the external static pressure is determined, where the determination section 30 determines the external static pressure of the air conditioner 1 by selecting the corresponding static-pressure setting number by using the calculation value ΔVsp calculated by the calculating section 29 on the basis of the static-pressure setting number determination table 33 using the motor output differences (ΔVsp) of the individual models stored in the storage section 32, exemplified in Fig. 9.

In step S14, when a static-pressure setting number is selected, and the external static pressure is determined, the process normally proceeds to step S15, where the rotational speed of the DC fan motor 12 is set by the rotational-speed setting section 31 on the basis of the rotational-speed-versus-static-pressure-setting table 34 stored in the storage section 32, exemplified in Fig. 10, so that a rated airflow rate can be obtained for the selected static-pressure setting number. For example, for the models shown in Fig. 10, in the case where static-pressure setting No. 6 is selected, and the external static pressure is determined to be 60 Pa, when the indicated airflow rate is 13 m³/min, the DC fan motor 12 is rotated at 1,180 rpm with the Uhi2 tap, and similarly, when the indicated airflow rate is 9 m³/min, the DC fan motor 12 is rotated at 870 rpm with the Me tap.

In other words, in the control flowchart shown in Fig. 5, when the static-pressure setting number of the external static pressure is determined in step S3, and the process proceeds to step S4, if it is determined that the static-pressure setting number has not been changed, the process proceeds to step S5. The operation in step S5 is an operation at the automatically determined static-pressure setting number, which corresponds to the operation of step S15 in Fig. 6, described above. On the other hand, if it is determined in step S4 that the static-pressure setting number has been manually changed, that is, the external static pressure setting is manually corrected with the external-static-pressure-correction setting section 17 of the remote control device 16, and the static-pressure setting number has been changed via the external-static-pressure correcting section 35, the process proceed to step S6. In this case, it is determined in step S6 whether the manually corrected static-pressure setting number is within a range limited by the limiting section 36 (for example, ±30 Pa = ±3) relative to the automatically determined static-pressure setting number, and the DC fan motor 12 is operated in the manner described below depending on the result.

If the determination result in step S6 is "manual setting No. < automatic setting No. - 3", the process proceeds to step S7, in which case the DC fan motor 12 is operated at a target static pressure, that is, the automatically determined static-pressure setting number minus 3. If it is determined that "manual setting No. > automatic setting No. + 3", the process proceeds to step S8, where the DC fan motor 12 is operated at a target static pressure, that is, the automatically determined static-pressure setting number plus 3. If it is determined that "manual setting No. ≤ automatic setting No. ± 3", the process proceeds to step S9, where the DC fan motor 12 is operated with a manually corrected static-pressure setting number as a target static pressure.

With the configuration described above, this embodiment offers the following operational advantages.

When the foregoing ducted air conditioner 1 is operated, the DC fan motor 12 is driven so that room air is taken into the unit main body 2 through the intake grill 3, the noise damping chamber 4, and the intake duct 5. The air is cooled or heated in the indoor-heat exchanger 11 by heat exchange with the refrigerant supplied from the external unit and is thereafter blown into the room through the outlet duct 6, the outlet unit 7, and the outlet grill 8 to be used in air conditioning the room.

In this ducted air conditioner 1, since the airflow resistance changes depending on the lengths, diameters, shapes, or the like of the outlet duct 6, the outlet unit 7, and the outlet grill 8, and the outlet airflow rate changes depending on the level of the external static pressure determined depending on the airflow resistance, it is necessary to obtain the rated airflow rate irrespective of the external static pressure by adjusting the airflow rate when installing the air conditioner 1 or from time to time as required. Thus, in this embodiment, the air conditioner 1 is operated for a test air blow, and a command signal is output from the air-blow test operation command section 27 to the operation command section 28 with the airflow-rate setting circuit (airflow-rate setting section) 26 at the first power-up after the air conditioner 1 is installed or when AUTO (No. 20) is selected with the external-static-pressure-correction setting section 17 of the remote control device 16.

Thus, the operation command section 28 operates the DC fan motor 12 at the two preset rotational speeds Arpm and Brpm, as shown in Fig. 7. During the operation, the rotational-speed command voltages VspA and VspB (see Fig. 8), which are motor output values output from the motor control circuit 23 to the DC fan motor 12, are read, the external static pressure is determined from the difference ΔVsp between the output values VspA and VspB by the unit itself, and the rotational speed of the DC fan motor 12 is set on the basis of the external static pressure from the rotational-speed-versus-static-pressure-setting table 34 so that the rated airflow rate can be obtained.

Specifically, the DC fan motor 12 is operated at the two preset rotational speeds Arpm and Brpm in accordance with a command from the operation command section 28, during which the rotational-speed command voltages VspA and VspB, which are output values from the controller 22 to the DC fan motor 12, are read, the difference ΔVsp between the output values is calculated by the calculating section 29, the external static pressure is determined by the determination section 30 from ΔVsp on the basis of the determination table 33, and the rotational speed of the DC fan motor 12 is set on the basis of the external static pressure from the rotational-speed-versus-static-pressure-setting table 34 so that a rated airflow rate can be obtained via the rotational-speed setting section 31, thereby allowing the airflow rate to be adjusted.

Thus, according to this embodiment, the ducted air conditioner 1 can be operated while ensuring the indicated airflow rate, thus preventing a decrease in performance due to a drop in airflow rate when the external static pressure is high and a draft due to an increase in airflow rate when the external static pressure is low. Furthermore, since the external static pressure is determined from the difference ΔVsp between the motor output values VspA and VspB at the two rotational speeds Arpm and Brpm, variations in the circuit components of the controller 22, the power voltage, the motor output values, and so on can be compensated for, allowing the airflow rate to be accurately adjusted. In other words, the external static pressure, which changes depending on the length, diameter, shape, and so on at the outlet duct 6 side, can be determined by the unit itself, and the airflow rate can be adjusted quickly and accurately so that the rated airflow rate for the external static pressure can be obtained.

Furthermore, in this embodiment, the external-static-pressure-correction setting section 17 is provided in the remote control device 16, and the external static pressure can be automatically determined or the setting thereof can be manually corrected by operating the external-static-pressure-correction setting section 17. The reason why the external-static-pressure-correction setting section 17 is thus provided is that it is necessary to increase or decrease the airflow rate of the air conditioner 1 depending on the use environment, which allows a correction setting for the external static pressure set by automatic determination to be manually made at the remote control device 16. However, in the case where a correction setting for the external static pressure set based on automatic determination is made manually, the range is limited to a range preset with the limiting section 36.

This is because the external static pressure setting is via rotational speed control and is not limited by the duct static pressure, and therefore, if the duct static pressure is set low while making the correction setting at the remote control device 16 under conditions where the rotational speed becomes high, the airflow rate exceeds the setting, which can cause problems such as drain water being blown out into the room, increased noise, and so on. By allowing the manual correction setting range to be limited to a preset range, a situation in which the airflow rate exceeds the set airflow rate can be prevented. This can prevent problems such as drain water being blown out into the room, increased noise, and so on even if the external static pressure is corrected manually.

Furthermore, in this embodiment, the automatic external-static-pressure determination operation is performed during an air-blow test operation that is performed at the first power-up after the air conditioner 1 is installed or when AUTO is selected with the external-static-pressure-correction setting section 17 provided in the remote control device 16. This allows the automatic external-static-pressure determination operation to be performed as needed during an air-blow test operation at the first power-up after the air conditioner 1 is installed or during an air-blow test operation that is performed when AUTO is selected with the external-static-pressure-correction setting section 17 in the remote control device 16. By setting the rotational speed of the DC fan motor 12 on the basis of the automatically determined external static pressure so that the rated airflow rate can be obtained, the airflow rate can be accurately adjusted, and furthermore, even if the automatically determined external static pressure is corrected at the remote control device 16, the external static pressure is limited within a set range to prevent the airflow rate from exceeding the set airflow rate, thus preventing problems when the external static pressure is corrected.

The present invention is not limited to the invention according to the foregoing embodiment; various modifications can be made without departing from the spirit thereof. In the foregoing embodiment, although an example in which sirocco fans are used in the DC fan motor 12 has been described, the present invention is not limited thereto; the present invention can of course also be applied to a configuration in which another propeller fan or the like is used as the fan. Furthermore, the outlet duct 6, the outlet unit 7, the outlet grill 8, and so on may have any form and configuration and are not particularly limited.

Furthermore, in the foregoing embodiment, although a configuration in which the noise damping chamber 4 and the intake duct 5 are connected to the intake side of the unit main body 2 has been described, it is needless to say that the present invention can also be applied to an air conditioner configured such that an intake port is provided in the lower surface of the unit main body 2, and room air is directly taken into the unit main body 2 through the intake port. Furthermore, in the foregoing embodiment, although the output value (command value) output from the motor control circuit 23 to the DC fan motor 12 is the rotational-speed command voltage Vsp, the output value need not necessarily be the rotational-speed command voltage Vsp; another command value may be used.

Furthermore, in the foregoing embodiment, although the manual setting range in which a correction setting can be made by the external-static-pressure-correction setting section 17 is limited to a preset range by the limiting section 36, for example, ±30 Pa(= ±3) relative to an automatically determined external static pressure, it is needless to say that the range is set in consideration of the detection accuracy and variations in the components, and so on, and is not limited to the range and can be set to any range. Furthermore, the limit range may be set to be large (for example, ±40 Pa = ±4) for a high target static pressure region, and may be set to be small (for example, ±20 Pa = ±2) for a low target static pressure region, or may be set only to the minus side (for example, -30 Pa = -3).

### {Reference Signs List}

1 ducted air conditioner (air conditioner)
2 unit main body
6 outlet duct
11 indoor-heat exchanger (heat exchanger)
12 DC fan motor
15 control box
16 remote control device
17 external-static-pressure-correction setting section
22 controller
23 motor control circuit
24 driving circuit
25 rotational-speed detection circuit
26 airflow-rate setting circuit (airflow-rate setting section)
27 air-blow test operation command section
28 operation command section
29 calculating section
30 determination section
31 rotational-speed setting section
32 storage section
33 determination table
34 rotational-speed-versus-static-pressure-setting table
35 external-static-pressure correcting section
36 limiting section

## Claims

1. An air conditioner (1) in which a duct for blowing air whose temperature is adjustable by a heat exchanger (11) into a room is connected to a unit main body (2) accommodating the heat exchanger (11) and a DC fan motor (12), and the rotational speed of the DC fan motor (12) is controllable so that a rated airflow rate can be obtained under an external static pressure that is determined depending on the configuration of the duct, the air conditioner comprising:
an airflow-rate setting section (26) for automatically determining the external static pressure after the air conditioner (1) is installed and for setting the rotational speed of the DC fan motor (12) on the basis of the external static pressure so as to obtain the rated airflow rate;
**characterized by**:
an external-static-pressure-correction setting section (17) that is provided in a remote control device (16) and that allows a correction setting for the external static pressure to be made manually,
wherein a limiting section (36) is provided for limiting a manual setting range in which a correction setting for the reference external static pressure that is automatically determined by the airflow-rate setting section (26) can be made by the external-static-pressure-correction setting section (17) to a preset width of range.

2. The air conditioner (1) according to Claim 1, wherein the air conditioner (1) is adapted to perform the automatic external-static-pressure determination operation during an air-blow test operation that is performed at the first power-up after the air conditioner (1) is installed or by selecting AUTO with the external-static-pressure-correction setting section (17) provided in the remote control device (16) .

3. The air conditioner according to Claim 1 or 2, wherein the airflow-rate setting section (26) includes a section for operating the DC fan motor (12) at two preset rotational speeds and the air conditioner further includes a motor control circuit (23) configured to output motor output values to the DC fan motor (12) during said operation at the two preset rotational speeds,
wherein the air conditioner is further configured to read the motor output values, to determine an external static pressure from the difference between the motor output values at the two rotational speeds, and to set the rotational speed of the DC fan motor (12) on the basis of the external static pressure from a rotational-speed-versus-static-pressure-setting table (34) so as to obtain a rated airflow rate.

## Patentansprüche

1. Klimaanlage (1), bei der ein Kanal zum Einblasen von Luft, deren Temperatur durch einen Wärmetauscher (11) einstellbar ist, in einen Raum mit einem Vorrichtungshauptkörper (2), der den Wärmetauscher (11) und einen Gleichstromventilatormotor (12) aufnimmt, verbunden ist und die Drehgeschwindigkeit des Gleichstromventilatormotors (12) regelbar ist, so dass unter einem externen statischen Druck, der in Abhängigkeit von der Ausgestaltung des Kanals bestimmt wird, eine Nennluftstromrate erhalten werden kann, wobei die Klimaanlage umfasst:
eine Luftstromrateneinstellsektion (26) zum automatischen Bestimmen des externen statischen Drucks, nachdem die Klimaanlage (1) angebracht wurde, und zum Einstellen der Drehgeschwindigkeit des Gleichstromventilatormotors (12) auf der Basis des externen statischen Drucks, um so die Nennluftstromrate zu erhalten,
**gekennzeichnet durch**:
eine Einstellsektion (17) zur Korrektur des externen statischen Drucks, die in einer Fernsteuerungsvorrichtung (16) vorgesehen ist und die es ermöglicht, eine Korrektureinstellung für den externen statischen Druck manuell vorzunehmen,
wobei eine Begrenzungssektion (36) zum Begrenzen eines manuellen Einstellbereichs auf eine voreingestellte Bereichsbreite vorgesehen ist, in der eine Korrektureinstellung für den externen statischen Referenzdruck, der automatisch durch die Luftstromrateneinstellsektion (26) bestimmt wurde, durch die Einstellsektion (17) zur Korrektur des externen statischen Drucks vorgenommen werden kann.

2. Klimaanlage (1) nach Anspruch 1, wobei die Klimaanlage (1) dazu ausgebildet ist, den Vorgang der automatischen Bestimmung des externen statischen Drucks während eines Luftblastestvorgangs durchzuführen, der beim ersten Hochfahren, nachdem die Klimaanlage (1) angebracht wurde, oder durch Anwählen von AUTO mit der Einstellsektion (17) zur Korrektur des externen statischen Drucks, die in der Fernsteuerungsvorrichtung (16) vorgesehen ist, durchgeführt wird.

3. Klimaanlage nach Anspruch 1 oder 2, wobei die Luftstromeinstellsektion (26) eine Sektion zum Betreiben des Gleichstromventilatormotors (12) mit zwei voreingestellten Drehgeschwindigkeiten umfasst und die Klimaanlage ferner eine Motorsteuerschaltung (23) umfasst, die dazu ausgebildet ist, während des Betriebs mit den zwei voreingestellten Drehgeschwindigkeiten Motorausgangswerte zu dem Gleichstromventilatormotor (12) auszugeben, wobei die Klimaanlage ferner dazu ausgebildet ist, die Motorausgangswerte zu lesen, einen externen statischen Druck aus der Differenz zwischen den Motorausgangswerten bei den zwei Drehgeschwindigkeiten zu bestimmen und die Drehgeschwindigkeit des Gleichstromventilatormotors (12) auf der Basis des externen statischen Drucks aus einer Drehgeschwindigkeit-gegenüber-Statikdruck-Einstelltabelle (34) einzustellen, um eine Nennluftstromrate zu erhalten.

## Revendications

1. Climatiseur (1) dans lequel une conduite pour le soufflage d'un air dont la température est ajustable par un échangeur thermique (11) dans une pièce est connectée à un corps principale d'unité (2) logeant l'échangeur thermique (11) et un moteur de ventilateur DC (12) et la vitesse de rotation du moteur de ventilateur DC (12) est contrôlable de façon à ce qu'un débit d'air nominal puisse être obtenu sous une pression statique externe qui est déterminée en fonction de la configuration de la conduite, le climatiseur comprenant :
une section de réglage du débit d'air (26) pour la détermination automatique de la pression statique externe après que le climatiseur (1) a été installé et pour le réglage de la vitesse de rotation du moteur de ventilateur DC (12) sur la base de la pression statique externe de façon à obtenir le débit d'air nominal ;
**caractérisé par** :
une section de réglage de correction de pression statique externe (17) qui est prévue dans un dispositif de commande à distance (16) et qui permet d'effectuer manuellement un réglage de la correction pour la pression statique externe,
une section de limitation (36) étant prévue pour limiter une plage de réglage manuel, dans laquelle un réglage de correction pour la pression statique externe de référence, qui est automatiquement déterminée par la section de réglage du débit d'air (26), peut être effectuée par la section de réglage de correction de pression statique externe (17) à une largeur préréglée de la plage.

2. Climatiseur (1) selon la revendication 1, dans lequel le climatiseur (1) est conçu pour effectuer l'opération de détermination automatique de la pression statique externe pendant une opération de test de soufflage d'air qui est effectué au premier démarrage après que le climatiseur (1) ait été installé ou en sélectionnant AUTO avec la section de réglage de correction de pression statique externe (17) disposée dans le dispositif de commande à distance (16).

3. Climatiseur (1) selon la revendication 1 ou 2, dans lequel la section de réglage du débit d'air (26) comprend une section permettant de faire fonctionner le moteur de ventilateur DC (12) à deux vitesses de rotation prédéterminées et le climatiseur comprend en outre un circuit de commande de moteur (23) conçu pour envoyer des valeurs de sortie du moteur au moteur de ventilateur DC (12) pendant ladite opération au deux vitesses de rotation préréglées,
le climatiseur étant en outre conçu pour lire les valeurs de sortie du moteur, pour déterminer une pression statique externe à partir de la différence entre les valeurs de sortie du moteur aux deux vitesses de rotation et pour régler la vitesse de rotation du moteur de ventilateur DC (12) sur la base de la pression statique externe à partir d'une table de réglage de la vitesse de rotation en fonction de la pression statique externe (34) de façon à obtenir un débit d'air nominal.
